# EUROPEAN PATENT APPLICATION

(11) **EP 2 289 850 A1**
(43) Date of publication of application: **02.03.2011**
(21) Application number: 09172887.3
(22) Date of filing: 13.10.2009
(51) Int. Cl.: C01F 11/46, C04B 11/02

(54) **Vacuum dehydrating system and dehydrating method for gypsum slurry**

(30) Priority: 29.07.2009 CN 200910159005
(71) Applicant: Shanghai Clyde Bergemann Machinery Co., Ltd., Shanghai 200090 (CN)
(72) Inventor: Xin, Yueqi, 200090, Shanghai (CN); Wen, Handong, 200090, Shanghai (CN)
(74) Representative: von Kreisler Selting Werner

(57) **Abstract**

The invention provides a vacuum dehydrating system for gypsum slurry, comprising a vacuum dehydrating apparatus, a first water supply apparatus for supplying filter cake washing water to the vacuum dehydrating apparatus, and a water heating apparatus for heating the filter cake washing water. The invention also provides a vacuum dehydrating method, comprising the following steps:
1) heating the filter cake washing water by the water heating apparatus;
2) supplying the heated filter cake washing water to a vacuum dehydrating apparatus during dehydrating the gypsum slurry by the vacuum dehydrating apparatus. In the invention, the filter cake washing water is heated. Due to the higher temperature of filter cake washing water, the dehydration rate of gypsum slurry is improved so that water content of gypsum filter cake after dehydration is decreased.

## Description

### Field of Invention

The invention relates to a wet type flue gas desulfurization process in power plant, in particular, to a vacuum dehydrating system for gypsum slurry as well as a method of vacuum dehydrating gypsum slurry using the vacuum dehydrating system.

### Background Art

Coal-fired power generation is a major form of power generation. The combustion of coal produces plenty of flue gas containing harmful substance, which is mainly sulfur dioxide. With the development of electric power industry, the environmental pollution caused by sulfur dioxide is becoming increasingly serious. In order to eliminate environmental pollution, the wet desulfurization technology using limestone, which can bring out relative high desulfurization efficiency, is widely adopted in power plants. In operation, limestone powder reacts with sulfur dioxide in the flue gas in desulfurization reaction tower to eliminate approximately 95% of sulfur dioxide in the flue gas, thereby producing gypsum slurry of which the water content is 85%. For applications of gypsum slurry in other fields such as architecture, the gypsum slurry is required to be dehydrated to become dry gypsum of which the water content is less than 10%.

Currently, the main way of dehydrating is to adopt vacuum dehydrating, the device of which is vacuum belt dehydrating machine. Gypsum slurry produced in the desulfurization reaction tower of which the water content is about 85% firstly passes water-powered cyclone machine to become gypsum slurry of which the water content is 50%, which is then transferred to the vacuum belt dehydrating machine to become gypsum product of which the water content is less than 10% using vacuum dehydrating technology.

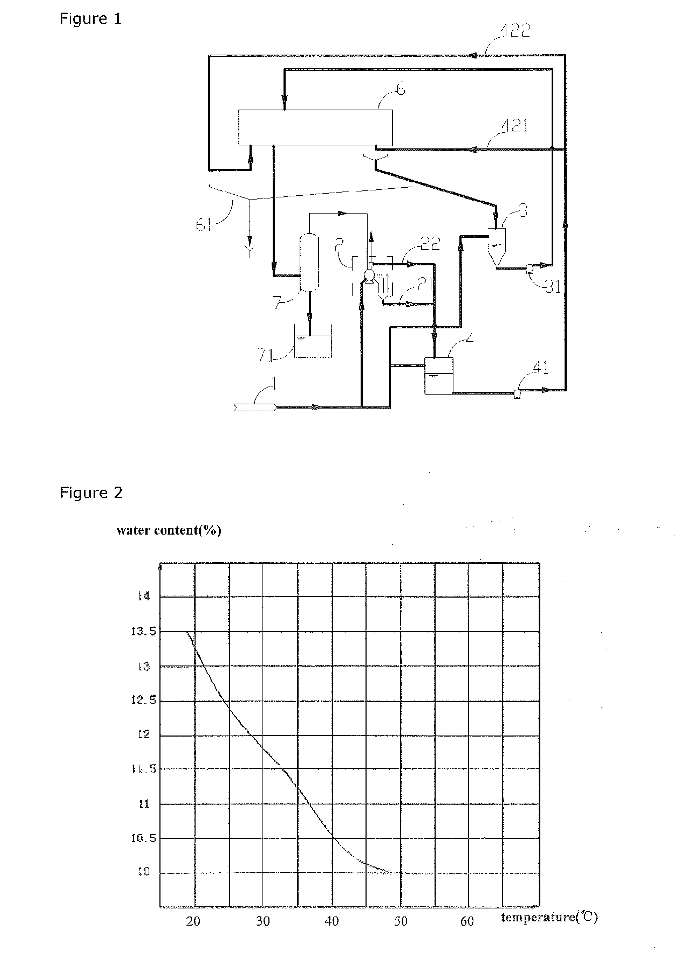

With reference to Fig.1, which shows a schematic view of a vacuum dehydrating system for gypsum slurry in prior art, gypsum filter cake is washed using water washing method to decrease the content of chlorine ion in the gypsum slurry. A first branch of the process water pipe is directly connected to a filter cake washing tank 3 to supply it with process water 1 as standby water of filter cake washing water. The filter cake washing tank 3 is, in turn, connected to a filter cake washing pump 31, the outlet end of which leads to a vacuum belt dehydrating machine 6. In the vacuum dehydrating device, a gas-liquid separation tank 7 is connected to a water outlet for filtration cake of the vacuum belt dehydrating machine 6. A water outlet of the gas-liquid separation tank 7 is connected to a sealing water tank 71, while a gas outlet of the gas-liquid separation tank 7 is connected to a vacuum pump 2, which pumps out the separated gas to create a vacuum in the vacuum belt dehydrating machine 6.

A second branch of the process water pipe is connected to the vacuum pump 2 to provide thereto process water 1 as sealing water. A sealing water outlet of the vacuum pump 2 is connected to a filter cloth washing water tank 4 to provide thereto the sealing water of the vacuum pump as filter cloth washing water. The pipe between the vacuum pump 2 and the filter cloth washing water tank 4 is diverged into two branches: a filling sealing water pipe 21 and a pump sealing water pipe22. The filter cloth washing water tank 4 is, in turn, connected to a filter cloth washing water pump 41, the pipe from which is diverged into two sub-pipes: a first washing pipe 421 and a second washing pipe 422. The first washing pipe 421 leads to the filter cloth of the vacuum belt dehydrating machine 6 to provide thereto filter cloth washing water. A filter cloth washing water discharge pipe is connected to the filter cake washing tank 3. Water after washing the filter cloth flows into the filter cake washing tank 3 along the filter cloth washing water discharge pipe for second use, in order to wash the filter cloth. The second washing pipe 422 leads to a belt slipway and a vacuum tank of the vacuum belt dehydrating machine 6 to provide water for lubricating the belt slipway and for sealing the vacuum tank, wherein a ground groove 61 is provided on the ground to discharge the splashed and lubricated water.

It is found from practical operation that, the dehydration rate of the vacuum dehydrating system for gypsum slurry is relatively low, and the water content of the gypsum filter cake after dehydration is relatively high, generally about 12%.

### Summary of the Invention

The problem addressed by the invention is to provide a vacuum dehydrating system for gypsum slurry which can improve the dehydration rate of gypsum slurry, reducing water content of the gypsum filter cake after dehydration. The invention also provides a method of vacuum dehydrating gypsum slurry using the vacuum dehydrating system.

The technical solution provided by the invention for solving the above technical problems is as follows:

A vacuum dehydrating system for gypsum slurry, comprising a vacuum dehydrating apparatus, a first water supply apparatus for supplying filter cake washing water to the vacuum dehydrating apparatus, and a water heating apparatus for heating the filter cake washing water.

Preferably, the water heating apparatus is disposed upstream of water inlet of the first water supply apparatus.

Preferably, the vacuum dehydrating apparatus comprises a vacuum pump, which is the water heating apparatus. A sealing water outlet of the vacuum pump is connected to the water inlet of the first water supply apparatus.

Preferably, the filter cake washing water supplying apparatus further comprises an outflow passage, a first branch of filter cake washing water coming from the outflow passage returns back to the vacuum pump.

Preferably, the vacuum dehydrating system for gypsum slurry further comprises a water storage apparatus for supplying sealing water to the vacuum pump. Both a water outlet of the outflow passage and a water outlet of the first branch of the process water pipe are connected to a water inlet of the water storage apparatus. A water outlet of the water storage apparatus is connected to a sealing water inlet of the vacuum pump.

Preferably, the vacuum dehydrating system for gypsum slurry further comprises a control apparatus which control the temperature of the sealing water in the water storage apparatus.

Preferably, the control apparatus comprises a first thermoscope for measuring the temperature of inflow water in the water storage apparatus, a second thermoscope for measuring the temperature of outflow water in the water storage apparatus, a flow rate switch for adjusting a flow rate of the first branch of filter cake washing water, and a controller which controls the temperature of sealing water in the water storage apparatus by, according to the temperature difference between the temperature of the inflow water and the temperature of the outflow water, regulating the flow rate switch to adjust the flow rate of the first branch of filter cake washing water.

A method of vacuum dehydrating gypsum slurry using the vacuum dehydrating system, comprising the following steps of:

1) heating the filter cake washing water by the water heating apparatus;

2) supplying the heated filter cake washing water to the vacuum dehydrating apparatus during dehydrating the gypsum slurry by the vacuum dehydrating apparatus.

Preferably, in step 1) the filter cake washing water is heated up to at least 50°C by the water heating apparatus.

Preferably, the water heating apparatus is a vacuum pump.

Preferably, in step 1), after the filter cake washing water is heated by the vacuum pump, the filter cake washing water is divided into a first branch of filter cake washing water and a second branch of filter cake washing water, the first branch of filter cake washing water is mixed with process water from a first branch of process water pipe in the water storage apparatus as vacuum pump sealing water;

the step 2) is specified as follows:

supplying the heated second branch of filter cake washing water to a vacuum dehydrating apparatus during dehydrating the gypsum slurry by the vacuum dehydrating apparatus.

Preferably, step 1) further comprises the steps of:

comparing the temperature of inflow water and the temperature of outflow water of a water storage apparatus;

adjusting a flow rate of the first branch of filter cake washing water to control the temperature of outflow water in the water storage apparatus, such that sealing water in the vacuum pump is heated up to at least 50°C.

The inventor, through several experiments, finds that after the temperature of the gypsum filter cake washing water is increased, the dehydration rate of the gypsum slurry is improved. Preferably, the filter cake washing water is heated up to at least 50°C so that the water content of gypsum filter cake after dehydration is less than 10%.

Through studies on the prior systems, the inventor finds that in these systems, heat is generated after the sealing water in the vacuum pump swirls at high speed in a vacuum chamber and rubs with vane wheels, and the temperature of the sealing water after being discharged from the vacuum pump is higher than that at the water inlet of the vacuum pump. In another preferred embodiment, the invention modifies the pipes of filter cake washing water and directly uses the sealing water flowing out of the vacuum pump at a higher temperature as filter cake washing water to wash the gypsum filter cake. Due to the higher temperature of washing water, the dehydration rate of the vacuum belt dehydrating machine is improved.

In yet another preferred embodiment, a portion of the sealing water from the water outlet of the vacuum pump is further circulated to once again enter the vacuum pump. Therefore, the temperature of sealing water flowing out once again becomes higher. Preferably, the temperature of sealing water from the water outlet of the vacuum pump can be controlled to be about 50 after several circulations. Using such sealing water as filter cake washing water to wash the filter cakes can improve the dehydration rate of the vacuum belt dehydrating machine, thereby producing a gypsum filter cake of which the water content is less than 10%.

### Brief Description of the Drawings

Figure 1 is a schematic view of a vacuum dehydrating system for gypsum slurry in prior art;

Figure 2 is a graph showing the relation between the temperature of filter cake washing water and water content of gypsum; and

Figure 3 is a schematic view of the vacuum dehydrating system for gypsum slurry according to the invention.

### Detailed Description of Embodiments

For further understanding of the invention, preferred embodiments of the invention will be described with reference to the drawings. However, it is understood that the description merely intends to illustrate the characteristics and advantages of the invention and does not mean to limit the claims.

After several experiments, the inventor finds that the variation of water content of gypsum filter cake after dehydration with the temperature of filter cake washing water shows certain rules. The graph showing the relation between the temperature of filter cake washing water and water content of gypsum is made in Figure 2.

It is seen from the experimental result shown in Figure 2 that, with increase of the temperature of filter cake washing water, water content of gypsum filter cake after being dehydrated by the vacuum belt dehydrating machine gradually decreases. Therefore, it is confirmed that the increase of the temperature of filter cake washing water will result in the improve of dehydration rate of vacuum belt dehydrating machine. Especially, when the temperature of filter cake washing water reaches 50°C, the dehydration rate for gypsum slurry can be increased by about 1%-2%, and the water content of gypsum filter cake after dehydration is less than 10%.

Therefore, one solution of the vacuum dehydrating system according to the invention comprises: a vacuum dehydrating apparatus, a first water supply apparatus for supplying filter cake washing water to the vacuum dehydrating apparatus, and a water heating apparatus for heating the filter cake washing water. Preferably, the filter cake washing water is heated up to at least 50°C.

Through studies on the prior systems, the inventor finds that in these systems, heat is generated after the sealing water in the vacuum pump swirls at high speed in a vacuum pump chamber and rubs vane wheels, and the temperature of the sealing water after discharging from the vacuum pump is higher than that at the water inlet of the vacuum pump. After measuring the temperatures of sealing water at the water inlet and water outlet of the vacuum pump respectively, the relation between the temperature of sealing water at water inlet and the temperature of sealing water at water outlet is determined and shown in table 1:

**Table 1**

| | |
|---|---|
| The relation between the temperature of sealing water at water inlet and the temperature of sealing water at water outlet | |

| The temperature of sealing water at water inlet (°C) | The temperature of sealing water at water outlet (°C) |
|---|---|
| 10 | 37 |
| 15 | 41 |
| 25 | 47.9 |
| 27 | 49.2 |

From the data in table 1, it can be seen that the temperature of sealing water at water outlet of the vacuum pump is higher than that at water inlet. The higher the temperature of sealing water at water inlet is, the higher the temperature of sealing water at water outlet is. Therefore, sealing water of the vacuum pump can be used as gypsum filter cake washing water. Preferably, a portion of the sealing water from the water outlet of the vacuum pump is further circulated to once again enter the vacuum pump so that the temperature of sealing water flowing out once again is higher. Due to the higher temperature of filter cake washing water, water content of gypsum filter cake after dehydration is lower.

As in the dehydrating system for gypsum slurry in the prior art filter cake washing water is from process water or water that has washed the filter cloth, the invention modifies the existing system to change the washing pipes for filter cakes and improve the temperature of filter cake washing water by using the inherent characteristics of vacuum pump, thereby improving dehydration rate of vacuum belt dehydrating machine.

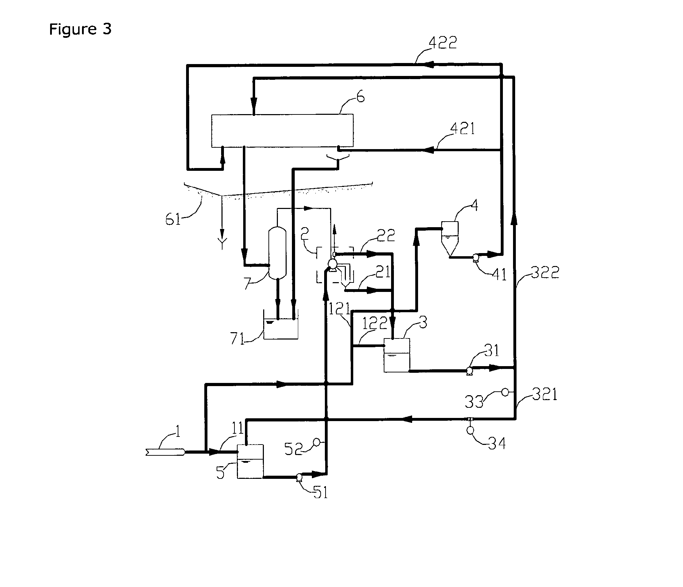

Reference is made to Figure 3, which shows a schematic view of the vacuum dehydrating system for gypsum slurry according to the invention.

The vacuum dehydrating system for gypsum slurry according to the invention comprises a vacuum dehydrating apparatus, a filter cake washing water tank 3, a filter cloth washing water tank 4 and a vacuum pump sealing water tank 5. The vacuum dehydrating apparatus comprises a gas-liquid separation tank 7, a vacuum pump 2 and a vacuum belt dehydrating machine 6. Here, filter cake washing water tank 3 serves as a first water supplying apparatus to supply filter cake washing water to the vacuum dehydrating apparatus. The filter cloth washing water tank 4 supplies filter cloth washing water to the vacuum dehydrating apparatus. The vacuum pump sealing water tank 5 serves as water storage apparatus to supply sealing water to the vacuum pump.

A sealing water outlet of the vacuum pump 2 is connected to the filter cake washing water tank 3. The vacuum pump 2 supplies sealing water to the filter cake washing water tank 3 as filter cake washing water. The pipe between the vacuum pump 2 and the filter cake washing water tank 3 is diverged into two branches: a filling sealing water pipe 21 and a pump sealing water pipe 22. The filter cake washing water tank 3 is, in turn, connected to a filter cake washing water pump 31, the pipe from which is diverged into two passages: a first outflow passage 321 and a second outflow passage 322. The second outflow passage 322 is connected to the vacuum belt dehydrating machine 6 to supply thereto filter cake washing water. As the filter cake washing water is from the sealing water of the vacuum pump 2 which in is a relatively higher temperature, the demand on the temperature of filter cake washing water is met. Of course, a water heating apparatus for heating the filter cake washing water, which heats up to at least 50°C by using steaming heating or electric heating method, can be provided upstream of the water inlet of the filter cake washing water tank 3 or the filter cake washing water inlet of the vacuum belt dehydrating machine 6 or in the filter cake washing water tank 3. However, in the site of desulfurization island, it is difficult to get access to heat source such as steam. If the filter cake washing water is heated up to at least 50°C by using electric heating method, a electric power of 2000 KW or even higher is required, which consumes too much electricity and thus increases the cost. The invention, which uses the existing devices, merely modified the pipes and improves the dehydration rate for gypsum slurry by controlling the temperature of outflow water of vacuum pump. Thus, the invention is more appropriate.

The first outflow passage 321 is connected to the vacuum pump sealing water tank 5 to circulate the first branch of filter cake washing water back to the vacuum pump sealing water tank 5. In addition, the water inlet of the vacuum pump sealing water tank 5 is also connected to the first branch of process water pipe 11 which supplies the first branch of process water to the vacuum pump sealing water tank 5.

The water outlet 5 of the vacuum pump sealing water tank 5 is connected to the sealing water inlet of the vacuum pump 2 to supply thereto the sealing water. Of course, it is also possible that the pipe from the filter cake washing water pump 31 is not diverged into two passages and leads only one way to the vacuum belt dehydrating machine 6. However, with the branching in the invention, the heated water in the first outflow passage 321 is mixed with the first branch of process water, and the mixed water acts as sealing water which is in a higher temperature than single process water. It can be seen from table 1 that, after the mixed water in a higher temperature enters the vacuum pump 2 as sealing water, the temperature of sealing water at the water outlet of the vacuum pump 2 will be higher. Then, the sealing water once again enters the filter cake washing water tank 3 and serves as filter cake washing water to wash the filter cake. The temperature of sealing water from the water outlet of the vacuum pump can be control to be about 50 after several circulations, thereby improving the dehydration rate of vacuum belt. It is therefore more appropriate to diverge the pipe from the filter cake washing water pump 31 into two passages.

In addition, a third branch of process water pipe 122 is connected to the water inlet of the filter cake washing water tank 3. The third branch of process water pipe 122 serves as a standby to supply filter cake washing water to the filter cake washing water tank 3. The valve of the third branch of process water pipe 122 is normally in a closed state and is opened only when the amount of filter cake washing water is increased or when the vacuum pump 2 does no work, such as when the vacuum pump 2 is being cleaned and therefore other devices shall be operated, so that process water directly flows into the filter cake washing water tank 3.

An inflow water temperature thermoscope 33 and a flow rate switch 34 are provided in the first outflow passage 321, and an outflow water temperature thermoscope 52 is provided in the pipe of water outlet of vacuum pump sealing water tank 5. The temperature of water in the first outflow passage 321 and the temperature of water in the pipe of water outlet of vacuum pump sealing water tank 5 are respectively measured by the inflow water temperature thermoscope 33 and the outflow water temperature thermoscope 52. After acquiring the difference between the two temperatures, the controller (not shown) adjusts the flow rate switch 34 to adjust water amount in the first outflow passage 321 so as to control the temperature of sealing water in the vacuum pump sealing water tank 5, so that the temperature of sealing water in the vacuum pump can be heated up to at least 50°C.

In the vacuum dehydrating apparatus, the gas-liquid separation tank 7 is connected to a water outlet, for washing filter cake, of the vacuum belt dehydrating machine 6. A water outlet of the gas-liquid separation tank 7 is connected to a sealing water tank 71, while a gas outlet of the gas-liquid separation tank 7 is connected to a vacuum pump 2, which pumps out the separated gas to create a vacuum in the vacuum belt dehydrating machine 6.

The water inlet of the filter cloth washing water tank 4 is connected to a second branch of process water pipe 121, which supplies filter cloth washing water. The filter cloth washing water tank 4 is, in turn, connected to a filter cloth washing water pump 41, the pipe from which is diverged into two sub-pipes: a first washing pipe 421 and a second washing pipe 422. The first washing pipe 421 leads to the filter cloth of the vacuum belt dehydrating machine 6 to provide thereto filter cloth washing water. A filter cloth washing water discharge pipe leads to the sealing water tank 71 to circulate the water after washing the filter cloth into the sealing water tank 71. The second washing pipe 422 leads to a belt slipway and a vacuum tank of the vacuum belt dehydrating machine 6 to supply water for lubricating the belt slipway and sealing the vacuum tank. A ground groove 61 is disposed on the ground to discharge the splashed and lubricated water.

When the above vacuum dehydrating system for gypsum slurry is used to dehydrate gypsum slurry, the specific dehydrating method is as follows:

The filter cake washing water in the invention comes from the sealing water of the vacuum pump 2, which comprises sealing water for vacuum pump filling and sealing water for the pump. The sealing water of the vacuum pump 2 flows into the filter cake washing water tank 3 along pipes. Filter cake washing water, after being pumped out by the filter cake washing pump 31, diverges into two branches, the first of which flows into the vacuum belt dehydrating machine 6 along the second outflow passage 322 to wash the filter cake and the second of which flows into the vacuum pump sealing water tank 5 as sealing water along the first outflow passage 321. When the vacuum pump 2 is not in operation and other devices are required to be run, the valve in the third branch of process water pipe 122 in opened so that process water flow directly into the filter cake washing water tank 3.

In addition to the filter cake washing water in the first outflow passage 321, the first branch of process water flows into the vacuum pump sealing water tank 5 as supplement along the first branch of process water pipe 11. The two parts of water mix in the vacuum pump sealing water tank 5 and the mixed water is pumped into the vacuum pump 2 by the sealing water pump 51 as sealing water of the vacuum pump 2. The temperature of water in the first outflow passage 321 and the temperature of water mixed in the vacuum pump sealing water tank 5 are respectively measured by the inflow water temperature thermoscope 33 and the outflow water temperature thermoscope 52. After acquiring the difference between the two temperatures, the controller system adjusts the flow rate switch 34 to adjust water amount in the first outflow passage 321 so as to control the temperature of mixed sealing water. The sealing water, after flowing out of the vacuum pump 2, flows once again into the filter cake washing water tank as filter cake washing water. The temperature of sealing water at the water outlet of the vacuum pump 2 can be controlled at about 50°C with such circulation.

The filter cake washing water flowing out of the second outflow passage 322 flows into the vacuum belt dehydrating machine 6 to wash the gypsum filter cake. The washed water, after being separated from gas by the gas-liquid separation tank 7, flows into the sealing water tank 71 and is discharged out of the system. The gas-liquid separation tank 7 is connected to the vacuum pump 2, which pumps out the separated gas by the gas-liquid separation tank 7 to create a vacuum in the vacuum belt dehydrating machine 6.

The filter cloth washing water comes directly from process water in the second branch of process water pipe 121. The second branch of process water in process water 1 flows into the filter cloth washing water tank 4 along the second branch of process water pipe 121. Filter cloth washing water diverges into two braches at the filter cloth washing water pump 41 and flows into the vacuum belt dehydrating machine 6. The first branch of washing water flows to the filter cloth of the vacuum belt dehydrating machine 6 along the first washing pipe 421 to wash the filter cloth, and the water after washing flows to the sealing water tank 71 to be discharges. The second branch of washing water flows to the belt slipway and vacuum tank of the vacuum belt dehydrating machine 6 along the second washing pipe 422 for lubricating the belt and sealing the vacuum tank. The lubricated and splashed water is difficult to be collected and is discharged along a ground groove 61.

The invention modified the filter cake washing water pipes in the prior art and controls the temperature of sealing water of the vacuum pump 2 at about 50°C, and uses the sealing water as filter cake washing water to wash the filer cake. Therefore, the invention improves the dehydration rate of gypsum slurry by the vacuum belt dehydrating machine so that the water content of gypsum filter cake after dehydration is less than 10%.

The vacuum dehydrating apparatus and dehydrating method for gypsum slurry according to the invention has been described above in detail. The specification sets forth the principle and embodiments of the invention by means of a specific embodiment. The description of the above embodiment is merely intended to help understand the method of the invention and the basic ideas thereof. It is noted that many modifications and variations which also fall into the scope of protection claimed in the claims can be made by those skilled in the art without departing from the principle of the invention.

## Claims

1. A vacuum dehydrating system for gypsum slurry comprising a vacuum dehydrating apparatus and a first water supply apparatus (3) for supplying filter cake washing water to the vacuum dehydrating apparatus, **characterized by** further comprising a water heating apparatus for heating the filter cake washing water.

2. A vacuum dehydrating system according to claim 1, wherein the water heating apparatus is disposed upstream of a water inlet of the first water supply apparatus (3).

3. A vacuum dehydrating system according to claim 2, wherein the vacuum dehydrating apparatus comprises a vacuum pump (2), and the water heating apparatus is the vacuum pump (2) of which a sealing water outlet is connected to the water inlet of the first water supply apparatus (3).

4. A vacuum dehydrating system according to claim 3, wherein the first water supply apparatus (3) further comprises an outflow passage, and a first branch of filter cake washing water coming from the outflow passage (321) returns back to the vacuum pump (2).

5. A vacuum dehydrating system according to claim 4, wherein the vacuum dehydrating system further comprises a water storage apparatus (5) for supplying sealing water to the vacuum pump (2), the outflow passage (321) and a water outlet of a first branch of process water pipe (11) are both connected to a water inlet of the water storage apparatus (5), a water outlet of the water storage apparatus (5) is connected to a sealing water inlet of the vacuum pump (2).

6. A vacuum dehydrating system according to claim 5, wherein the vacuum dehydrating system further comprises a control apparatus for controlling the temperature of the sealing water in the water storage apparatus (5).

7. A vacuum dehydrating system according to claim 6, wherein the control apparatus comprises a first thermoscope (33) for measuring the temperature of inflow water in the water storage apparatus (5), a second thermoscope (52) for measuring the temperature of outflow water in the water storage apparatus (5), a flow rate switch (34) for adjusting the flow rate of the first branch of filter cake washing water, and a controller which controls the temperature of sealing water in the water storage apparatus (5) by, according to the temperature difference between the temperature of the inflow water and the temperature of the outflow water, regulating the flow rate switch (34) to adjust the flow rate of the first branch of filter cake washing water.

8. A vacuum dehydrating method for gypsum slurry, **characterized by** comprising the steps of:
1) heating a filter cake washing water by a water heating apparatus;
2) supplying the heated filter cake washing water to the vacuum dehydrating apparatus during dehydrating the gypsum slurry by the vacuum dehydrating apparatus.

9. The method of claim 8 using the vacuum dehydrating system according to claim 1.

10. A vacuum dehydrating method according to claim 8 or 9, wherein in step 1) the filter cake washing water is heated up to at least 50°C by the water heating apparatus.

11. A vacuum dehydrating method according to any of claims 8 to 10, wherein the water heating apparatus is a vacuum pump (2).

12. A vacuum dehydrating method according to claim 11, wherein in step 1), after the filter cake washing water is heated by the vacuum pump (2), the filter cake washing water is divided into a first branch of filter cake washing water and a second branch of filter cake washing water, the first branch of filter cake washing water is mixed with the process water from the first branch of process water pipe (11) in a water storage apparatus (5) as vacuum pump sealing water; and
in the step 2), the heated second branch of filter cake washing water is supplied to the vacuum dehydrating apparatus during dehydrating the gypsum slurry by the vacuum dehydrating apparatus.

13. A vacuum dehydrating method according to claim 8, wherein the step 1) further comprises the steps of:
comparing the temperature of inflow water and the temperature of outflow water of a water storage apparatus (5);
adjusting the flow rate of the first branch of filter cake washing water to control the temperature of outflow water from the water storage apparatus (5), such that the sealing water in the vacuum pump (2) is heated up to at least 50°C.
